# FASCICULE DE BREVET EUROPEEN

(11) **EP 1 057 698 B1**
(45) Date de publication et mention de la délivrance du brevet: **20.10.2004**
(21) Numéro de dépôt: 00401554.1
(22) Date de dépôt: 31.05.2000
(51) Int. Cl.: B60R 21/20

(54) **Couvercle pour un module airbag, volant de direction le comportant et procédé d'obtention de ce couvercle**
Abdeckung für ein Airbagmodul, dieses umfassendes Lenkrad und Verfahren zu deren Herstellung
Airbag module cover, steering wheel comprising said cover and method of producing same

(30) Priorité: 02.06.1999 FR 9906956
(43) Date de publication de la demande: 06.12.2000
(73) Titulaire: Autoliv-Isodelta, 86190 Chire-en-Montreuil (FR)
(72) Inventeur: Geron, Jean, 86190 Chire en Montreuil (FR)
(74) Mandataire: Santarelli

(56) Documents cités:
- EP-A- 0 590 779
- EP-A- 0 715 992
- EP-A- 0 764 563
- PATENT ABSTRACTS OF JAPAN vol. 1997, no. 11, 28 novembre 1997 (1997-11-28) & JP 09 183375 A (TOKYO SEAT KK), 15 juillet 1997 (1997-07-15)
- PATENT ABSTRACTS OF JAPAN vol. 015, no. 276 (M-1135), 12 juillet 1991 (1991-07-12) & JP 03 096454 A (IKEDA BUSSAN CO LTD), 22 avril 1991 (1991-04-22)
- PATENT ABSTRACTS OF JAPAN vol. 1997, no. 11, 28 novembre 1997 (1997-11-28) & JP 09 183373 A (TOKYO SEAT KK), 15 juillet 1997 (1997-07-15)

## Description

L'invention a trait à la protection des occupants d'un véhicule contre les chocs grâce à un module airbag.

On sait que les couvercles qui masquent ce type de module doivent être capables de s'ouvrir lors du gonflement du sac de manière totalement sure et qu'en particulier l'ouverture doit débuter dès le commencement du gonflage du sac (il ne doit pas y avoir dans le couvercle une accumulation de tension qui pourrait se libérer violemment) tandis qu'aucune particule ne doit se détacher du couvercle lors de son ouverture (une particule se détachant serait susceptible de constituer un projectile dangereux pour les occupants du véhicule).

Différentes solutions sont déjà connues pour réaliser l'ouverture avec la sécurité voulue, l'une de ces solutions étant de permettre au couvercle de se déchirer progressivement lors du gonflement du sac, en prévoyant que le corps du couvercle, qui est en matière relativement dure, présente du côté interne une rainure de guidage de déchirement, généralement en forme de H ou de U. Les caractéristiques de préambule de la revendication 1 sont issues de JP-A-09183375.

On a déjà proposé, pour la mise en oeuvre de ce type de solution, de prévoir une cavité d'amorce de déchirement au centre de cette rainure.

On connaît par ailleurs du document EP-A-1 107 885, qui fait partie de l'état de la technique au sens de l'article 54(3) CBE pour l'Allemagne, l'Espagne, la France, le Royaume-Uni et l'Italie, un tel couvercle dont une couche de décoration située du côté externe présente une amorce de déchirement cachée sous une pièce d'insert visuel fixée sur le corps dont l'amorce de déchirement est traversante.

L'invention vise à améliorer les caractéristiques d'aspect et de toucher de ce type de couvercle.

Elle propose à cet effet un couvercle pour un module airbag, comportant un corps en matière relativement dure avec une rainure de guidage de déchirement ménagée du côté interne et avec, au centre de ladite rainure, une cavité d'amorce de déchirement, ledit couvercle comportant en outre une feuille de cuir du côté externe ; caractérisé en ce que ladite cavité d'amorce de déchirement s'étend sur toute l'épaisseur du couvercle, y compris dans la feuille de cuir.

La cavité d'amorce de déchirement débouche ainsi sur le côté visible du couvercle, contrairement aux couvercles antérieurs où la cavité n'est ménagée que sur une partie de l'épaisseur, mais cela ne constitue en réalité pas un inconvénient insurmontable, en particulier si l'on met en oeuvre les caractéristiques exposées ci-après.

Grâce au fait que la cavité d'amorce de déchirement est pratiquée dans toute l'épaisseur du couvercle, y compris dans la feuille de cuir, la présence de cette dernière, qui confère d'excellentes caractéristiques d'aspect et de toucher au couvercle, est, malgré la tendance qu'a le cuir à se ballonner plutôt qu'à se déchirer lorsqu'il est soumis à une certaine pression, compatible avec les exigences de sécurité en matière d'ouverture.

Selon des caractéristiques préférées, la cavité d'amorce de déchirement est formée au niveau de ladite feuille de cuir par une fine perforation.

Grâce à ces caractéristiques, l'on bénéficie d'une certaine discrétion de la cavité du côté externe.

En outre, la portion de la cavité qui traverse la feuille de cuir peut aisément être réalisée avec un outil pointu tel qu'une aiguille, une lame ou un poinçon, qui est par exemple engagé depuis le côté interne par une portion de la cavité déjà ménagée dans le corps.

Selon d'autres caractéristiques préférées, ladite cavité d'amorce de déchirement est remplie au moins partiellement par de la cire qui l'obture du côté externe.

Ce remplissage est par exemple réalisé en versant une goutte de cire liquide dans la cavité que l'on essuie du côté externe avant solidification, de sorte que la cire, en particulier si elle est dans le même ton que le cuir, est pratiquement imperceptible du côté externe, de même que l'existence de la cavité obturée par la cire.

L'adhésion de la cire sur la feuille de cuir et sur le reste du couvercle permet en outre de garantir qu'aucune particule de cire ne se détachera du couvercle lors de l'ouverture de celui-ci.

Selon d'autres caractéristiques préférées, le couvercle selon l'invention comporte en outre une garniture en matière relativement souple qui est disposée entre ledit corps et ladite feuille de cuir.

Une telle garniture assure une certaine souplesse à l'enfoncement et donc un confort certain au toucher (le corps est dans une matière dure), particulièrement appréciable si le couvercle fait partie du volant d'un véhicule, qui est en contact régulier avec les mains de l'utilisateur.

De préférence, ledit corps et ladite garniture sont chacun en matière plastique moulée et sont associés l'un à l'autre par bi-injection tandis que ladite feuille de cuir est collée sur ladite garniture.

Le couvercle peut ainsi être fabriqué de façon simple et commode, tout en ayant un comportement particulièrement fiable lors de l'ouverture, notamment lorsque, comme dans les couvercles bi-matières connus, le corps et la garniture sont en matière élastomériques respectives qui sont miscibles et qui adhèrent l'une à l'autre lors du moulage, avec la matière de la garniture (matière de la deuxième injection) qui a une résistance à la déchirure très faible, de même que la feuille de cuir à partir du moment où celle-ci est pourvue d'une amorce de déchirement, la parfaite adhésion de la garniture sur le corps et la parfaite adhésion de la feuille de cuir sur la garniture associées à la relative dureté du corps, ayant pour effet que le déchirement de celui-ci se prolonge directement par le déchirement de la garniture et de la feuille de cuir.

De préférence, ladite cavité d'amorce de déchirement comporte une portion venue de moulage qui s'ouvre du côté interne et une perforation qui va de ladite portion venue de moulage jusqu'au côté externe.

Ces caractéristiques permettent de disposer d'une façon simple et commode d'une cavité qui présente les caractéristiques géométriques appropriées pour amorcer le déchirement dans les meilleures conditions, aussi bien dans le corps en matière relativement dure (caractéristiques géométriques obtenues par moulage), que dans la garniture (caractéristiques géométriques obtenues par moulage et/ou par perforation) et dans la feuille de cuir (caractéristiques géométriques obtenues par perforation).

De préférence, ladite portion venue de moulage est ménagée dans toute l'épaisseur du corps et dans une partie de l'épaisseur de la garniture tandis que ladite perforation traverse le restant de l'épaisseur de la garniture et la feuille de cuir.

De préférence, ladite garniture présente une épaisseur de l'ordre de 2 mm.

Cet ordre de grandeur convient particulièrement bien pour avoir à la fois de bonnes caractéristiques de toucher et de déchirement.

De préférence, ladite garniture présente une dureté de l'ordre de 20 shore A.

La garniture est ainsi un peu plus souple que dans les couvercles bi-matières connus, ce supplément de souplesse offrant en combinaison avec la feuille de cuir d'excellentes caractéristiques de toucher.

De préférence, ladite feuille de cuir présente une épaisseur de l'ordre de 0,6 à 0,7 mm.

Avec cette épaisseur, sensiblement moins importante qu'une feuille de cuir standard dans l'équipement des véhicules, on obtient d'excellentes caractéristiques de déchirement.

L'invention vise également, selon un deuxième aspect, un volant de direction pour véhicule automobile comportant un module airbag, caractérisé en ce qu'il comporte, pour ledit module, un couvercle tel qu'exposé ci-dessus.

L'invention vise également, sous un troisième aspect, un procédé d'obtention d'un couvercle de module airbag, caractérisé en ce qu'il comporte, pour que ledit couvercle soit conforme aux caractéristiques exposées ci-dessus :
- l'opération de mouler dans une matière plastique relativement dure un corps présentant d'un premier côté une rainure de guidage de déchirement ainsi qu'une portion de cavité d'amorce de déchirement au centre de ladite rainure ;
- l'opération de surmouler sur un deuxième côté dudit corps, opposé au premier côté, une garniture en matière plastique et relativement molle ;
- l'opération de coller sur ladite garniture, à l'opposé dudit corps, une feuille de cuir ; et
- l'opération de perforer la matière se trouvant entre ladite portion de cavité et le côté externe de ladite feuille de cuir, pour compléter ladite cavité d'amorce de déchirement.

Selon des caractéristiques préférées du procédé, notamment pour les raisons exposées dans ce qui précède :
- on réalise ladite opération de perforer avec un outil pointu ; et éventuellement
- on fait pénétrer ledit outil depuis le côté interne dans la portion de cavité venue de moulage jusqu'à crever la surface du côté externe ; et/ou éventuellement
- le procédé comporte en outre l'opération de couler une goutte de cire dans ladite cavité pour l'obturer au moins du côté externe ; et éventuellement
- le procédé comporte en outre l'opération d'essuyer la goutte de cire du côté externe, avant solidification.

Selon d'autres caractéristiques préférées, pour ces mêmes raisons :
- l'opération de mouler le corps comporte l'injection de ladite matière relativement dure dans un moule comportant un demi-moule inférieur et un demi-moule supérieur, le demi-moule inférieur comportant pour former ladite portion de cavité, une pointe traversant le plan de joint, un logement de réception de ladite pointe étant prévu dans le demi-moule supérieur, et
- l'opération de surmouler comporte les sous-opérations de changer le demi-moule supérieur pour un autre demi-moule supérieur adapté, en coopération avec le demi-moule inférieur, à l'obtention, dans ladite matière relativement molle, de ladite garniture, ladite pointe ne traversant pas le plan de joint.

L'exposé de l'invention sera maintenant poursuivi par la description d'exemples de réalisation, donnée ci-après à titre illustratif et non limitatif, en référence aux dessins annexés. Sur ceux-ci :
- la figure 1 est une vue en plan d'un volant de direction d'un véhicule conforme à l'invention ;
- la figure 2 est une vue en élévation-coupe du couvercle du module airbag que comporte ce volant, prise selon le plan repéré par II-II sur la figure 1, la portion centrale du couvercle étant également montrée en agrandissement ;
- les figures 3 et 4 sont des vues similaires montrant le couvercle respectivement avant et pendant l'opération de perforation finale de la cavité d'amorce de déchirement ; et
- la figure 5 est une vue similaire à la figure 1, montrant une variante de la forme de la rainure de déchirement du couvercle.

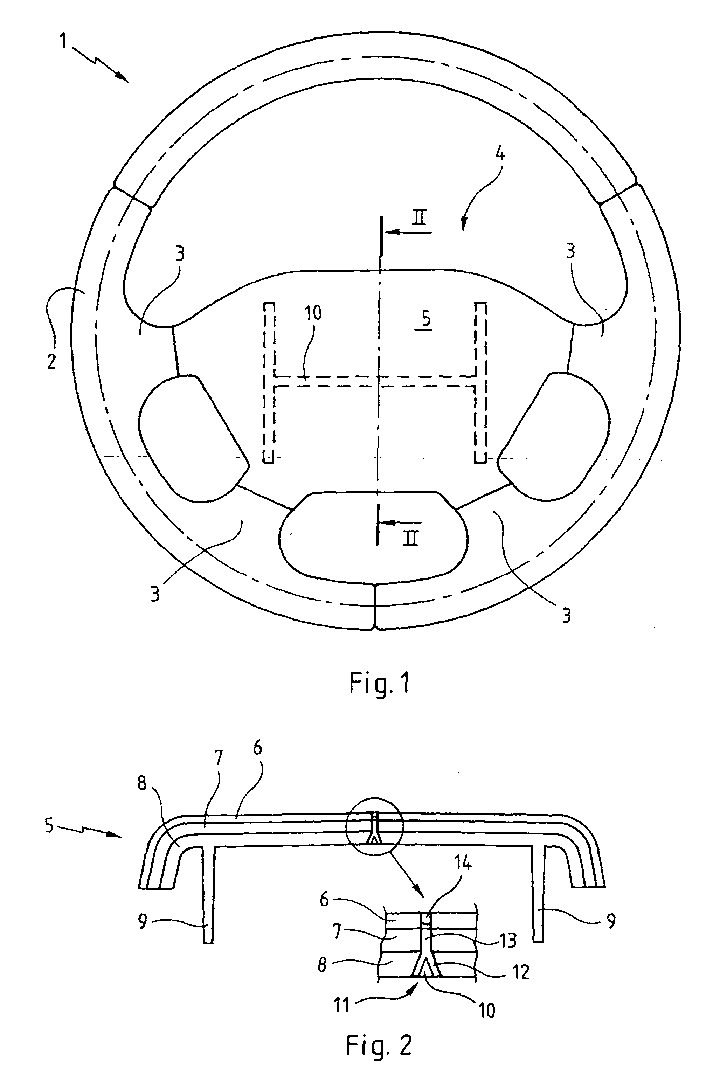

Le volant de direction 1 illustré sur la figure 1 comporte une jante 2 reliée, par quatre courtes branches 3, à un moyeu central 4 muni d'un module airbag coiffé par un couvercle 5, la jante 2 et les branches 3 étant gainées par un revêtement en cuir dont les bords sont réunis de la façon habituelle par une couture (non représentée), le revêtement étant ici en trois morceaux, respectivement pour la partie supérieure de la jante 4, pour sa moitié et les deux branches situées à droite, ainsi que pour sa moitié et les deux branches situées à gauche.

Le couvercle 5 présente un aspect similaire à la jante 2 et aux branches 3, grâce à une feuille de cuir 6 (figure 2) que comporte ce couvercle du côté externe, la feuille 6 étant collée sur une garniture 7 en matière plastique relativement souple qui recouvre elle-même un corps 8 en matière plastique relativement dure.

Le corps 8 a une forme générale de cuvette inversée et présente, en saillie du côté interne, des pieds 9 (non représentés sur la figure 1) servant à sa fixation sur l'armature du volant 1, et présente également, toujours du côté interne, une rainure 10 de guidage de déchirement, ici en forme de H (voir figure 1), et présente enfin une cavité 11 d'amorce de déchirement (non représentée sur la figure 1), cette cavité étant située au centre de la rainure 10.

La cavité 11 s'étend sur toute l'épaisseur du couvercle 5, c'est-à-dire depuis le côté interne jusqu'au côté externe. Elle comporte deux portions 12 et 13 de géométries différentes, la portion 12 s'ouvrant à une extrémité sur le côté interne et se raccordant à l'autre extrémité à la portion 13, la portion 12 se rétrécissant entre le côté interne et le raccord avec la portion 13, cette dernière, qui s'étend de la portion 12 jusqu'au côté externe, gardant sensiblement la même section de la portion 12 jusqu'au côté externe.

De ce côté, la portion 13 est obturée par un bouchon 14, ici en cire, dont la surface externe est à fleur de celle de la feuille de cuir 6.

On notera que la figure 2 montre le couvercle 5 de façon très schématique, sans respecter les proportions.

Ainsi, alors que le corps 9 présente une épaisseur générale à peu près égale à l'épaisseur de la garniture 7, ici de l'ordre de 2 mm, la feuille de cuir 6 est beaucoup plus fine, son épaisseur étant ici de l'ordre de 0,6 à 0,7 mm, et de même la portion 13 de la cavité 11 est beaucoup plus fine, cette portion étant formée, comme on le verra ci-après, par perforation.

La finesse de cette perforation alliée à la présence du bouchon 14 rendent très discrète la cavité 11 du côté externe, cette discrétion étant renforcée par le fait que la cire 14 est colorée dans la même teinte que la surface externe de la feuille 6 et par le fait que la surface externe du bouchon 14 et celle de la feuille 6 sont à fleur l'une de l'autre.

On va maintenant expliquer comment s'ouvre le couvercle 5 lors du gonflement du sac du module airbag.

Lorsqu'un tel gonflement se produit, le sac exerce une certaine pression sur le côté interne du couvercle 5, qui est fermement retenu à l'armature du volant 1 par les pattes de fixation 9, l'effort exercé par le sac sur le couvercle 5 ayant pour effet que le corps 8, qui est relativement dur, commence à se rompre à partir de la cavité 11, la rupture se poursuivant ensuite progressivement le long de la rainure 10.

Du fait que la garniture 7 adhère parfaitement sur le corps 8 et que la feuille 6 adhère parfaitement sur la garniture 7, allié au fait que la feuille 6 peut facilement se déchirer à partir de la portion 13 de la cavité 11 et que la garniture 7 peut elle aussi se déchirer facilement, le déchirement progressif du corps 8 se prolonge directement par le déchirement de la garniture 7 et de la feuille 6, le couvercle 5 se déchirant ainsi sur toute son épaisseur suivant le dessin de la rainure 10, ce qui libère deux volets qui s'ouvrent à l'opposé l'un de l'autre pour laisser passer le sac en cours de gonflement.

On notera que, du fait de la parfaite adhésion de la feuille 6 sur la garniture 7 et de la garniture 7 sur le corps 8, ainsi que de la parfaite adhésion du bouchon 14 sur la feuille de cuir 6, voire sur la garniture 7 et sur le corps 8, aucune particule du couvercle 5 ne se détache au cours de cette ouverture, malgré la rapidité du gonflement du sac.

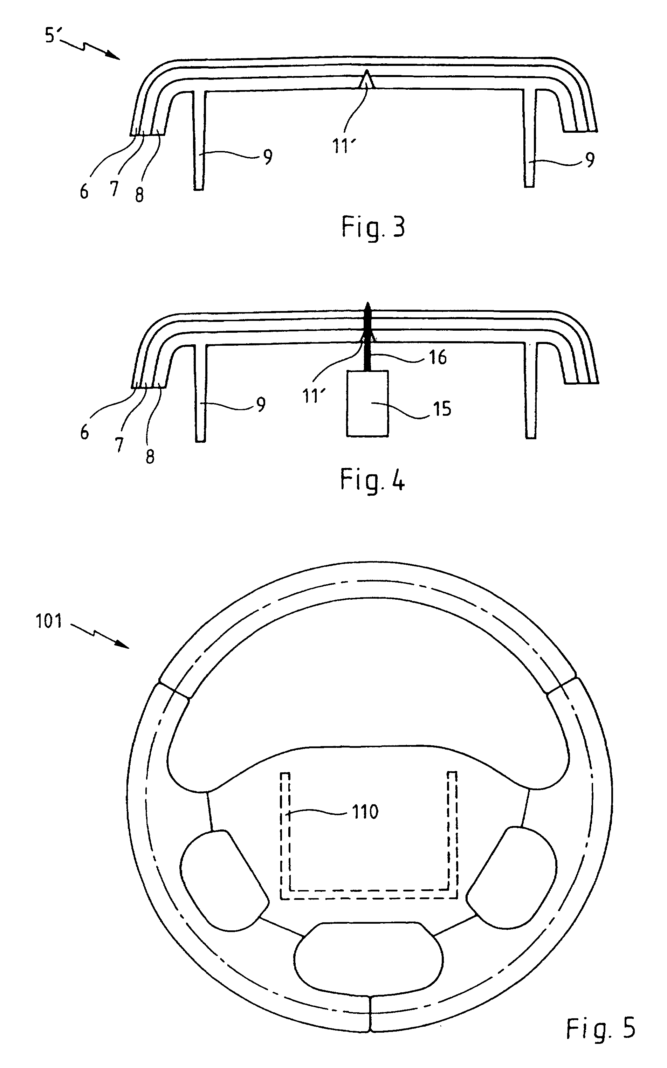

On va maintenant expliquer, à l'appui des figures 3 et 4, comment l'on procède à la fabrication du couvercle 5.

D'une façon générale, le corps 8 et la garniture 7 sont chacun en matière plastique moulée et sont associés l'un à l'autre par bi-injection tandis que la feuille de cuir 6 est collée sur la garniture 7.

Le corps 8 est moulé par injection d'une matière plastique relativement dure dans un moule comportant un demi-moule inférieur et un demi-moule supérieur, avec le demi-moule inférieur qui comporte, pour former la portion 12 de la cavité 11, une pointe qui traverse le plan de joint, un logement de réception de cette pointe étant prévue dans le demi-moule supérieur.

Une fois le corps 8 moulé, on surmoule la garniture 7 sur le corps 8, en changeant le demi-moule supérieur pour un autre demi-moule supérieur adapté, en coopération avec le demi-moule inférieur dans lequel reste le corps 8, à l'obtention de la garniture 7, par injection d'une matière plastique relativement souple miscible avec la matière relativement dure avec laquelle a été formé le corps 8, de sorte que la garniture 7 et le corps 8 adhèrent parfaitement l'un à l'autre.

Dans l'ensemble formé par le demi-moule inférieur et le deuxième demi-moule supérieur, le plan de joint se trouve au-dessus de la pointe du demi-moule inférieur, de sorte que l'on obtient finalement un ensemble qui comporte, au centre de la rainure 10, une cavité 11' (figure 3) qui converge, à partir du côté interne, jusqu'à un fond se trouvant à peu près à mi-épaisseur de la garniture 7.

On procède ensuite au collage de la feuille de cuir 6 sur la garniture 7, ce qui permet d'obtenir l'ensemble 5' montré sur la figure 3.

On notera que la dureté de la garniture 7 et l'épaisseur ainsi que le nerf de la feuille de cuir 6 sont choisis pour offrir après collage une souplesse à l'enfoncement rendant le toucher du couvercle 5 confortable ; la garniture 7 ayant ici une dureté de l'ordre de 20 shore A, c'est-à-dire une souplesse plus importante que les couvercles bi-injection conventionnels dont la garniture n'est pas recouverte d'une feuille de cuir.

Une fois l'ensemble 5' réalisé, on procède ensuite, comme montré sur la figure 4, à la perforation de la partie du couvercle se trouvant entre le fond de la cavité 11' et le côté externe, grâce à une petite presse comportant un vérin 15 et un outil pointu 16 commandé par le vérin 15, en faisant pénétrer ce dernier, placé du côté interne, dans la cavité 11' jusqu'à avoir entièrement perforé l'ensemble 5' entre le fond de la cavité 11' et le côté externe, ainsi que montré sur la figure 4 : ce qui reste de la cavité 11' forme la portion 12 de la cavité 11 tandis que la portion 13 est formée par la fine perforation résultant de l'action de l'outil 16.

On réalise ensuite le bouchon 14, en versant une goutte de cire liquide dans la cavité 11 puis en essuyant du côté externe, avant solidification, la cire excédentaire.

Le volant 101 montré sur la figure 5 est similaire au volant 1, si ce n'est que la rainure 10 est remplacée par une rainure 110 en forme de U plutôt qu'en forme de H.

Dans une variante non représentée, utilisable lorsqu'il n'est pas nécessaire d'avoir une souplesse à l'enfoncement, le couvercle ne comporte pas de garniture, la feuille de cuir étant collée directement sur le corps en matière relativement dure.

Dans d'autres variantes non représentées, le couvercle ne sert pas à un module airbag de volant, mais à un module airbag passager ou à un module airbag latéral.

## Revendications (Revendications pour l'(les) Etat(s) contractant(s) suivant(s): DE, ES, FR, GB, IT)

1. Couvercle pour un module airbag, comportant un corps (8) en matière relativement dure avec une rainure (10 ; 110) de guidage de déchirement ménagée du côté interne et avec, au centre de ladite rainure (10 ; 110), une cavité (11) d'amorce de déchirement, ledit couvercle comportant en outre une feuille de cuir (6) du côté externe ; **caractérisé en ce que** ladite cavité (11) d'amorce de déchirement s'étend sur toute l'épaisseur du couvercle (5), y compris dans la feuille de cuir, ladite cavité (11) d'amorce de déchirement étant formée au niveau de ladite feuille de cuir (6) par une fine perforation (13).

2. Couvercle selon la revendication 1, **caractérisé en ce que** ladite cavité (11) d'amorce de déchirement est remplie au moins partiellement par de la cire (14) qui l'obture du côté externe.

3. Couvercle selon l'une quelconque des revendications 1 ou 2, **caractérisé en ce qu'**il comporte en outre une garniture (7) en matière relativement souple qui est disposée entre ledit corps (8) et ladite feuille de cuir (6).

4. Couvercle selon la revendication 3, **caractérisé en ce que** ledit corps (8) et ladite garniture (7) sont chacun en matière plastique moulée et sont associés l'un à l'autre par bi-injection tandis que ladite feuille de cuir (6) est collée sur ladite garniture (7).

5. Couvercle selon la revendication 4, **caractérisé en ce que** ladite cavité (11) d'amorce de déchirement comporte une portion (12) venue de moulage qui s'ouvre du côté interne et une perforation (13) qui va de ladite portion (12) venue de moulage jusqu'au côté externe.

6. Couvercle selon la revendication 5, **caractérisé en ce que** ladite portion (12) venue de moulage est ménagée dans toute l'épaisseur du corps (8) et dans une partie de l'épaisseur de la garniture (7) tandis que ladite perforation traverse le restant de l'épaisseur de la garniture (7) et la feuille de cuir (6).

7. Couvercle selon l'une quelconque des revendications 3 à 6, **caractérisé en ce que** ladite garniture (7) présente une épaisseur de l'ordre de 2 mm.

8. Couvercle selon l'une quelconque des revendications 3 à 7, **caractérisé en ce que** ladite garniture (7) présente une dureté de l'ordre de 20 shore A.

9. Couvercle selon l'une quelconque des revendications 1 à 8, **caractérisé en ce que** ladite feuille de cuir (6) présente une épaisseur de l'ordre de 0,6 à 0,7 mm.

10. Volant de direction pour véhicule automobile comportant un module airbag, **caractérisé en ce qu'**il comporte pour ledit module un couvercle (5) selon l'une quelconque des revendications 1 à 9.

11. Procédé d'obtention d'un couvercle de module airbag, **caractérisé en ce qu'**il comporte, pour que ledit couvercle (5) soit conforme à l'une quelconque des revendications 1 à 9 :
- l'opération de mouler dans une matière plastique relativement dure un corps (8) présentant d'un premier côté une rainure (10 ; 110) de guidage de déchirement ainsi qu'une portion (11') de cavité d'amorce de déchirement au centre de ladite rainure (10 ; 110) ;
- l'opération de surmouler sur un deuxième côté dudit corps (8), opposé au premier côté, une garniture (7) en matière plastique et relativement molle ;
- l'opération de coller sur ladite garniture (7), à l'opposé dudit corps (8), une feuille de cuir (6) ; et
- l'opération de perforer la matière se trouvant entre ladite portion (11') de cavité et le côté externe de ladite feuille de cuir (6), pour compléter ladite cavité d'amorce de déchirement.

12. Procédé selon la revendication 11, **caractérisé en ce qu'**on réalise ladite opération de perforer avec un outil pointu (16).

13. Procédé selon la revendication 12, **caractérisé en ce qu'**on fait pénétrer ledit outil depuis le côté interne dans la portion (11') de cavité venue de moulage jusqu'à crever la surface du côté externe.

14. Procédé selon l'une quelconque des revendications 11 à 13, **caractérisé en ce qu'**il comporte en outre l'opération de couler une goutte de cire (14) dans ladite cavité (11) pour l'obturer au moins du côté externe.

15. Procédé selon la revendication 14, **caractérisé en ce qu'**il comporte en outre l'opération d'essuyer la goutte de cire (14) du côté externe, avant solidification.

16. Procédé selon l'une quelconque des revendications 11 à 13, **caractérisé en ce que** :
- l'opération de mouler le corps (8) comporte l'injection de ladite matière relativement dure dans un moule comportant un demi-moule inférieur et un demi-moule supérieur, le demi-moule inférieur comportant pour former ladite portion (11') de cavité, une pointe traversant le plan de joint, un logement de réception de ladite pointe étant prévu dans le demi-moule supérieur, et
- l'opération de surmouler comporte les sous-opérations de changer le demi-moule supérieur pour un autre demi-moule supérieur adapté, en coopération avec le demi-moule inférieur, à l'obtention, dans ladite matière relativement molle, de ladite garniture (7), ladite pointe ne traversant pas le plan de joint.

## Revendications (Revendications pour l'(les) Etat(s) contractant(s) suivant(s): AT, BE, CH, CY, DK, FI, GR, IE, LI, LU, MC, NL, PT, SE)

1. Couvercle pour un module airbag, comportant un corps (8) en matière relativement dure avec une rainure (10 ; 110) de guidage de déchirement ménagée du côté interne et avec, au centre de ladite rainure (10 ; 110), une cavité (11) d'amorce de déchirement, ledit couvercle comportant en outre une feuille de cuir (6) du côté externe ; **caractérisé en ce que** ladite cavité (11) d'amorce de déchirement s'étend sur toute l'épaisseur du couvercle (5), y compris dans la feuille de cuir.

2. Couvercle selon la revendication 1, **caractérisé en ce que** la cavité (11) d'amorce de déchirement est formée au niveau de ladite feuille de cuir (6) par une fine perforation (13).

3. Couvercle selon l'une quelconque des revendications 1 ou 2, **caractérisé en ce que** ladite cavité (11) d'amorce de déchirement est remplie au moins partiellement par de la cire (14) qui l'obture du côté externe.

4. Couvercle selon l'une quelconque des revendications 1 à 3, **caractérisé en ce qu'**il comporte en outre une garniture (7) en matière relativement souple qui est disposée entre ledit corps (8) et ladite feuille de cuir (6).

5. Couvercle selon la revendication 4, **caractérisé en ce que** ledit corps (8) et ladite garniture (7) sont chacun en matière plastique moulée et sont associés l'un à l'autre par bi-injection tandis que ladite feuille de cuir (6) est collée sur ladite garniture (7).

6. Couvercle selon la revendication 5, **caractérisé en ce que** ladite cavité (11) d'amorce de déchirement comporte une portion (12) venue de moulage qui s'ouvre du côté interne et une perforation (13) qui va de ladite portion (12) venue de moulage jusqu'au côté externe.

7. Couvercle selon la revendication 6, **caractérisé en ce que** ladite portion (12) venue de moulage est ménagée dans toute l'épaisseur du corps (8) et dans une partie de l'épaisseur de la garniture (7) tandis que ladite perforation traverse le restant de l'épaisseur de la garniture (7) et la feuille de cuir (6).

8. Couvercle selon l'une quelconque des revendications 4 à 7, **caractérisé en ce que** ladite garniture (7) présente une épaisseur de l'ordre de 2 mm.

9. Couvercle selon l'une quelconque des revendications 4 à 8, **caractérisé en ce que** ladite garniture (7) présente une dureté de l'ordre de 20 shore A.

10. Couvercle selon l'une quelconque des revendications 1 à 9, **caractérisé en ce que** ladite feuille de cuir (6) présente une épaisseur de l'ordre de 0,6 à 0,7 mm.

11. Volant de direction pour véhicule automobile comportant un module airbag, **caractérisé en ce qu'**il comporte pour ledit module un couvercle (5) selon l'une quelconque des revendications 1 à 10.

12. Procédé d'obtention d'un couvercle de module airbag, **caractérisé en ce qu'**il comporte, pour que ledit couvercle (5) soit conforme à l'une quelconque des revendications 1 à 10 :
- l'opération de mouler dans une matière plastique relativement dure un corps (8) présentant d'un premier côté une rainure (10 ; 110) de guidage de déchirement ainsi qu'une portion (11') de cavité d'amorce de déchirement au centre de ladite rainure (10 ; 110) ;
- l'opération de surmouler sur un deuxième côté dudit corps (8), opposé au premier côté, une garniture (7) en matière plastique et relativement molle ;
- l'opération de coller sur ladite garniture (7), à l'opposé dudit corps (8), une feuille de cuir (6) ; et
- l'opération de perforer la matière se trouvant entre ladite portion (11') de cavité et le côté externe de ladite feuille de cuir (6), pour compléter ladite cavité d'amorce de déchirement.

13. Procédé selon la revendication 12, **caractérisé en ce qu'**on réalise ladite opération de perforer avec un outil pointu (16).

14. Procédé selon la revendication 13, **caractérisé en ce qu'**on fait pénétrer ledit outil depuis le côté interne dans la portion (11') de cavité venue de moulage jusqu'à crever la surface du côté externe.

15. Procédé selon l'une quelconque des revendications 12 à 14, **caractérisé en ce qu'**il comporte en outre l'opération de couler une goutte de cire (14) dans ladite cavité (11) pour l'obturer au moins du côté externe.

16. Procédé selon la revendication 15, **caractérisé en ce qu'**il comporte en outre l'opération d'essuyer la goutte de cire (14) du côté externe, avant solidification.

17. Procédé selon l'une quelconque des revendications 12 à 14, **caractérisé en ce que** :
- l'opération de mouler le corps (8) comporte l'injection de ladite matière relativement dure dans un moule comportant un demi-moule inférieur et un demi-moule supérieur, le demi-moule inférieur comportant pour former ladite portion (11') de cavité, une pointe traversant le plan de joint, un logement de réception de ladite pointe étant prévu dans le demi-moule supérieur, et
- l'opération de surmouler comporte les sous-opérations de changer le demi-moule supérieur pour un autre demi-moule supérieur adapté, en coopération avec le demi-moule inférieur, à l'obtention, dans ladite matière relativement molle, de ladite garniture (7), ladite pointe ne traversant pas le plan de joint.

## Patentansprüche (Patentansprüche für folgende(n) Vertragsstaat(en): DE, ES, FR, GB, IT)

1. Abdeckung für ein Airbag-Modul, mit einem Körper (8) aus einem verhältnismäßig harten Werkstoff, der eine Sollreißnut (10; 110), die auf der Innenseite ausgebildet ist, und in der Mitte der Nut (10; 110) einen Reißzünderhohlraum (11) aufweist, wobei die Abdeckung außerdem auf der Außenseite eine Lederschicht (6) aufweist; **dadurch gekennzeichnet, dass** sich der Reißzünderhohlraum (11) über die gesamte Dicke der Abdeckung (5) einschließlich der Lederschicht erstreckt und auf Höhe der Lederschicht (6) durch eine feine Perforation (13) gebildet ist.

2. Abdeckung nach Anspruch 1, **dadurch gekennzeichnet, dass** der Reißzünderhohlraum (11) wenigstens teilweise mit Wachs (14) gefüllt ist, das ihn auf der Außenseite verschließt.

3. Abdeckung nach einem der Ansprüche 1 oder 2, **dadurch gekennzeichnet, dass** sie außerdem einen Belag (7) aus einem verhältnismäßig weichen Werkstoff umfasst, der zwischen dem Körper (8) und der Lederschicht (6) angeordnet ist.

4. Abdeckung nach Anspruch 3, **dadurch gekennzeichnet, dass** der Körper (8) und der Belag (7) jeweils aus gegossenem Kunststoff bestehen und durch Doppeleinspritzung miteinander verbunden sind, während die Lederschicht (6) auf den Belag (7) geklebt ist.

5. Abdeckung nach Anspruch 4, **dadurch gekennzeichnet, dass** der Reißzünderhohlraum (11) einen durch Gießen gebildeten Abschnitt (12), der sich zur Innenseite öffnet, und eine Perforation (13), die von dem durch Gießen geschaffenen Abschnitt (12) bis zu der Außenseite verläuft, umfasst.

6. Abdeckung nach Anspruch 5, **dadurch gekennzeichnet, dass** der durch Gießen gebildete Abschnitt (12) über die gesamte Dicke des Körpers (8) und einen Teil der Dicke des Belags (7) ausgebildet ist, während die Perforation durch die verbleibende Dicke des Belags (7) und die Lederschicht (6) verläuft.

7. Abdeckung nach einem der Ansprüche 3 bis 6, **dadurch gekennzeichnet, dass** der Belag (7) eine Dicke in der Größenordnung von 2 mm aufweist.

8. Abdeckung nach einem der Ansprüche 3 bis 7, **dadurch gekennzeichnet, dass** der Belag (7) eine Härte in der Größenordnung von 20 Shore A aufweist.

9. Abdeckung nach einem der Ansprüche 1 bis 8, **dadurch gekennzeichnet, dass** die Lederschicht (6) eine Dicke in der Größenordnung von 0,6 bis 0,7 mm aufweist.

10. Lenkrad für Kraftfahrzeug, das ein Airbag-Modul umfasst, **dadurch gekennzeichnet, dass** es für das Modul eine Abdeckung (5) nach einem der Ansprüche 1 bis 9 umfasst.

11. Verfahren zum Erhalten einer Abdeckung für Airbag-Modul, **dadurch gekennzeichnet, dass** es, damit die Abdeckung (5) in Übereinstimmung mit einem der Ansprüche 1 bis 9 ist, umfasst:
- den Vorgang des Gießens eines Körpers (8) aus einem verhältnismäßig harten Kunststoff, wobei der Körper (8) auf einer ersten Seite eine Sollreißnut (10; 110) sowie in der Mitte der Nut (10; 110) einen Reißzünderhohlraum-Abschnitt (11') aufweist;
- den Vorgang des Überformens eines Belags (7) aus einem verhältnismäßig weichen Kunststoff auf einer zweiten Seite des Körpers (8) gegenüber der ersten Seite;
- den Vorgang des Klebens einer Lederschicht (6) auf den Belag (7) gegenüber dem Körper (8); und
- den Vorgang des Perforierens des Materials, das sich zwischen dem Hohlraumabschnitt (11') und der Außenseite der Lederschicht (6) befindet, um den Reißzünderhohlraum zu vervollständigen.

12. Verfahren nach Anspruch 11, **dadurch gekennzeichnet, dass** der Vorgang des Perforierens mit einem spitzigen Werkzeug (16) ausgeführt wird.

13. Verfahren nach Anspruch 12, **dadurch gekennzeichnet, dass** das Werkzeug von der Innenseite in den durch Gießen gebildeten Hohlraumabschnitt (11') eindringt, bis die Oberfläche der Außenseite eingeschnitten wird.

14. Verfahren nach einem der Ansprüche 11 bis 13, **dadurch gekennzeichnet, dass** es außerdem den Vorgang des Gießens eines Wachstropfens (14) in den Hohlraum (11), um ihn wenigstens auf der Außenseite zu verschließen, umfasst.

15. Verfahren nach Anspruch 14, **dadurch gekennzeichnet, dass** es außerdem den Vorgang des Überwischens des Wachstropfens (14) von der Außenseite aus vor seiner Verfestigung umfasst.

16. Verfahren nach einem der Ansprüche 11 bis 13, **dadurch gekennzeichnet, dass**:
- der Vorgang des Gießformens des Körpers (8) das Einspritzen des verhältnismäßig harten Werkstoffs in eine Gießform, die eine untere Halbform und eine obere Halbform aufweist, umfasst, wobei die untere Halbform zum Formen des Hohlraumabschnitts (11') eine durch die Verbindungsebene verlaufende Spitze aufweist, wobei in der oberen Halbform ein Aufnahmesitz für die Spitze vorgesehen ist, und
- der Vorgang des Überformens die Untervorgänge des Austauschens der oberen Halbform gegen eine andere geeignete obere Halbform, die mit der unteren Halbform zusammenwirkt, wenn der Belag (7) aus dem verhältnismäßig weichen Werkstoff erhalten wird, umfasst, wobei die Spitze nicht durch die Verbindungsebene verläuft.

## Patentansprüche (Patentansprüche für folgende(n) Vertragsstaat(en): AT, BE, CH, CY, DK, FI, GR, IE, LI, LU, MC, NL, PT, SE)

1. Abdeckung für ein Airbag-Modul, mit einem Körper (8) aus einem verhältnismäßig harten Werkstoff, der eine Sollreißnut (10; 110), die auf der Innenseite ausgebildet ist, und in der Mitte der Nut (10; 110) einen Reißzünderhohlraum (11) aufweist, wobei die Abdeckung außerdem auf der Außenseite eine Lederschicht (6) aufweist; **dadurch gekennzeichnet, dass** sich der Reißzünderhohlraum (11) über die gesamte Dicke der Abdeckung (5) einschließlich der Lederschicht erstreckt.

2. Abdeckung nach Anspruch 1, **dadurch gekennzeichnet, dass** der Reißzünderhohlraum (11) auf Höhe der Lederschicht (6) durch eine feine Perforation (13) gebildet ist

3. Abdeckung nach einem der Ansprüche 1 oder 2, **dadurch gekennzeichnet, dass** der Reißzünderhohlraum (11) wenigstens teilweise mit Wachs (14) gefüllt ist, das ihn auf der Außenseite verschließt.

4. Abdeckung nach einem der Ansprüche 1 bis 3, **dadurch gekennzeichnet, dass** sie außerdem einen Belag (7) aus einem verhältnismäßig weichen Werkstoff umfasst, der zwischen dem Körper (8) und der Lederschicht (6) angeordnet ist.

5. Abdeckung nach Anspruch 4, **dadurch gekennzeichnet, dass** der Körper (8) und der Belag (7) jeweils aus gegossenem Kunststoff bestehen und durch Doppeleinspritzung miteinander verbunden sind, während die Lederschicht (6) auf den Belag (7) geklebt ist.

6. Abdeckung nach Anspruch 5, **dadurch gekennzeichnet, dass** der Reißzünderhohlraum (11) einen durch Gießen gebildeten Abschnitt (12), der sich zur Innenseite öffnet, und eine Perforation (13), die von dem durch Gießen geschaffenen Abschnitt (12) bis zu der Außenseite verläuft, umfasst.

7. Abdeckung nach Anspruch 6, **dadurch gekennzeichnet, dass** der durch Gießen gebildete Abschnitt (12) über die gesamte Dicke des Körpers (8) und einen Teil der Dicke des Belags (7) ausgebildet ist, während die Perforation durch die verbleibende Dicke des Belags (7) und die Lederschicht (6) verläuft.

8. Abdeckung nach einem der Ansprüche 4 bis 7, **dadurch gekennzeichnet, dass** der Belag (7) eine Dicke in der Größenordnung von 2 mm aufweist.

9. Abdeckung nach einem der Ansprüche 4 bis 8, **dadurch gekennzeichnet, dass** der Belag (7) eine Härte in der Größenordnung von 20 Shore A aufweist.

10. Abdeckung nach einem der Ansprüche 1 bis 9, **dadurch gekennzeichnet, dass** die Lederschicht (6) eine Dicke in der Größenordnung von 0,6 bis 0,7 mm aufweist.

11. Lenkrad für Kraftfahrzeug, das ein Airbag-Modul umfasst, **dadurch gekennzeichnet, dass** es für das Modul eine Abdeckung (5) nach einem der Ansprüche 1 bis 10 umfasst.

12. Verfahren zum Erhalten einer Abdeckung für Airbag-Modul, **dadurch gekennzeichnet, dass** es, damit die Abdeckung (5) in Übereinstimmung mit einem der Ansprüche 1 bis 10 ist, umfasst:
- den Vorgang des Gießens eines Körpers (8) aus einem verhältnismäßig harten Kunststoff, wobei der Körper (8) auf einer ersten Seite eine Sollreißnut (10; 110) sowie in der Mitte der Nut (10; 110) einen Reißzünderhohlraum-Abschnitt (11') aufweist;
- den Vorgang des Überformens eines Belags (7) aus einem verhältnismäßig weichen Kunststoff auf einer zweiten Seite des Körpers (8) gegenüber der ersten Seite;
- den Vorgang des Klebens einer Lederschicht (6) auf den Belag (7) gegenüber dem Körper (8); und
- den Vorgang des Perforierens des Materials, das sich zwischen dem Hohlraumabschnitt (11') und der Außenseite der Lederschicht (6) befindet, um den Reißzünderhohlraum zu vervollständigen.

13. Verfahren nach Anspruch 12, **dadurch gekennzeichnet, dass** der Vorgang des Perforierens mit einem spitzigen Werkzeug (16) ausgeführt wird.

14. Verfahren nach Anspruch 13, **dadurch gekennzeichnet, dass** das Werkzeug von der Innenseite in den durch Gießen gebildeten Hohlraumabschnitt (11') eindringt, bis die Oberfläche der Außenseite eingeschnitten wird.

15. Verfahren nach einem der Ansprüche 12 bis 14, **dadurch gekennzeichnet, dass** es außerdem den Vorgang des Gießens eines Wachstropfens (14) in den Hohlraum (11), um ihn wenigstens auf der Außenseite zu verschließen, umfasst.

16. Verfahren nach Anspruch 15, **dadurch gekennzeichnet, dass** es außerdem den Vorgang des Überwischens des Wachstropfens (14) von der Außenseite aus vor seiner Verfestigung umfasst.

17. Verfahren nach einem der Ansprüche 12 bis 14, **dadurch gekennzeichnet, dass**:
- der Vorgang des Gießformens des Körpers (8) das Einspritzen des verhältnismäßig harten Werkstoffs in eine Gießform, die eine untere Halbform und eine obere Halbform aufweist, umfasst, wobei die untere Halbform zum Formen des Hohlraumabschnitts (11') eine durch die Verbindungsebene verlaufende Spitze aufweist, wobei in der oberen Halbform ein Aufnahmesitz für die Spitze vorgesehen ist, und
- der Vorgang des Überformens die Untervorgänge des Austauschens der oberen Halbform gegen eine andere geeignete obere Halbform, die mit der unteren Halbform zusammenwirkt, wenn der Belag (7) aus dem verhältnismäßig weichen Werkstoff erhalten wird, umfasst, wobei die Spitze nicht durch die Verbindungsebene verläuft.

## Claims (Claims for the following Contracting State(s): DE, ES, FR, GB, IT)

1. Cover for an airbag module, comprising a body (8) made from a relatively hard material with a tearing guide groove (10; 110) formed on the inside and a tearing starting cavity (11) at the center of said groove (10; 110), said cover further comprising a leather outer skin (6); **characterized in that** said tearing starting cavity (11) extends throughout the thickness of the cover (5), including the leather skin and, at the level of said leather skin (6), said tearing starting cavity (11) is formed by a fine perforation (13).

2. Cover according to claim 1, **characterized in that** said tearing starting cavity (11) is at least partially filled with wax (14) that closes off the external side.

3. Cover according to either claim 1 or claim 2, **characterized in that** it further comprises a lining (7) of relatively flexible material between said body (8) and said leather skin (6).

4. Cover according to claim 3, **characterized in that** said body (8) and said lining (7) are each molded from a plastic material and are associated with each other by dual-injection and said leather skin (6) is glued to said lining (7).

5. Cover according to claim 4, **characterized in that** said tearing starting cavity (11) has a molded portion (12) that is open on the inside and a perforation (13) that extends from said molded portion (12) to the outside.

6. Cover according to claim 5, **characterized in that** said molded portion (12) is formed throughout the thickness of the body (8) and in a portion of the thickness of the lining (7) and said perforation passes through the remainder of the thickness of the lining (7) and the leather skin (6).

7. Cover according to any of claims 3 to 6, **characterized in that** said lining (7) has a thickness of the order of 2 mm.

8. Cover according to any of claims 3 to 7, **characterized in that** said lining (7) has a Shore A hardness of the order of 20.

9. Cover according to any of claims 1 to 8, **characterized in that** said leather skin (6) has a thickness of the order of 0.6 to 0.7 mm.

10. Automobile vehicle steering wheel comprising an airbag module, **characterized in that** it comprises a cover (5) for said module according to any of claims 1 to 9.

11. Method of obtaining an airbag module cover, **characterized in that** it comprises, for said cover (5) to conform to any of claims 1 to 9:
- the operation of molding from a relatively hard plastic material a body (8) having on a first side a tearing guide groove (10; 110) and a tearing starting cavity portion (11') at the center of said groove (10; 110);
- the operation of molding a relatively soft plastic material lining (7) onto a second side of said body (8) opposite the first side;
- the operation of gluing a leather skin (6) to said lining (7) on the side opposite said body (8); and
- the operation of perforating the material between said cavity portion (11') and the external side of said leather skin (6) to complete said tearing starting cavity.

12. Method according to claim 11, **characterized in that** said perforating operation is carried out with a pointed tool (16).

13. Method according to claim 12, **characterized in that** said tool is caused to penetrate into the molded cavity portion (11') from the inside until it breaks through the surface on the outside.

14. Method according to any of claims 11 to 13, **characterized in that** it further comprises the operation of casting a drop of wax (14) into said cavity (11) to close off at least the external side.

15. Method according to claim 14, **characterized in that** it further comprises the operation of wiping the drop of wax (14) on the outside before it solidifies.

16. Method according to any of claims 11 to 13, **characterized in that**:
- the operation of molding the body (8) includes injecting said relatively hard material into a mold comprising a lower half-mold and an upper half-mold, the lower half-mold comprising, for forming said cavity portion (11'), a point passing through the joint plane, a housing for receiving said point being provided in the upper half-mold, and
- the molding operation comprises the sub-operations of changing the upper half-mold for another upper half-mold adapted to cooperate with the lower half-mold to produce said relatively soft material lining (7), said point not passing through the joint plane.

## Claims (Claims for the following Contracting State(s): AT, BE, CH, CY, DK, FI, GR, IE, LI, LU, MC, NL, PT, SE)

1. Cover for an airbag module, comprising a body (8) made from a relatively hard material with a tearing guide groove (10; 110) formed on the inside and a tearing starting cavity (11) at the center of said groove (10; 110), said cover further comprising a leather outer skin (6); **characterized in that** said tearing starting cavity (11) extends throughout the thickness of the cover (5), including the leather skin.

2. Cover according to claim 1, **characterized in that**, at the level of said leather skin (6), the tearing starting cavity (11) is formed by a fine perforation (13).

3. Cover according to either claim 1 or claim 2, **characterized in that** said tearing starting cavity (11) is at least partially filled with wax (14) that closes off the external side.

4. Cover according to any of claims 1 to 3, **characterized in that** it further comprises a lining (7) of relatively flexible material between said body (8) and said leather skin (6).

5. Cover according to claim 4, **characterized in that** said body (8) and said lining (7) are each molded from a plastic material and are associated with each other by dual-injection and said leather skin (6) is glued to said lining (7).

6. Cover according to claim 5, **characterized in that** said tearing starting cavity (11) has a molded portion (12) that is open on the inside and a perforation (13) that extends from said molded portion (12) to the outside.

7. Cover according to claim 6, **characterized in that** said molded portion (12) is formed throughout the thickness of the body (8) and in a portion of the thickness of the lining (7) and said perforation passes through the remainder of the thickness of the lining (7) and the leather skin (6).

8. Cover according to any of claims 4 to 7, **characterized in that** said lining (7) has a thickness of the order of 2 mm.

9. Cover according to any of claims 4 to 8, **characterized in that** said lining (7) has a Shore A hardness of the order of 20.

10. Cover according to any of claims 1 to 9, **characterized in that** said leather skin (6) has a thickness of the order of 0.6 to 0.7 mm.

11. Automobile vehicle steering wheel comprising an airbag module, **characterized in that** it comprises a cover (5) for said module according to any of claims 1 to 10.

12. Method of obtaining an airbag module cover, **characterized in that** it comprises, for said cover (5) to conform to any of claims 1 to 10:
- the operation of molding from a relatively hard plastic material a body (8) having on a first side a tearing guide groove (10; 110) and a tearing starting cavity portion (11') at the center of said groove (10; 110);
- the operation of molding a relatively soft plastic material lining (7) onto a second side of said body (8) opposite the first side;
- the operation of gluing a leather skin (6) to said lining (7) on the side opposite said body (8); and
- the operation of perforating the material between said cavity portion (11') and the external side of said leather skin (6) to complete said tearing starting cavity.

13. Method according to claim 12, **characterized in that** said perforating operation is carried out with a pointed tool (16).

14. Method according to claim 13, **characterized in that** said tool is caused to penetrate into the molded cavity portion (11') from the inside until it breaks through the surface on the outside.

15. Method according to any of claims 12 to 14, **characterized in that** it further comprises the operation of casting a drop of wax (14) into said cavity (11) to close off at least the external side.

16. Method according to claim 15, **characterized in that** it further comprises the operation of wiping the drop of wax (14) on the outside before it solidifies.

17. Method according to any of claims 12 to 14, **characterized in that**:
- the operation of molding the body (8) includes injecting said relatively hard material into a mold comprising a lower half-mold and an upper half-mold, the lower half-mold comprising, for forming said cavity portion (11'), a point passing through the joint plane, a housing for receiving said point being provided in the upper half-mold, and
- the molding operation comprises the sub-operations of changing the upper half-mold for another upper half-mold adapted to cooperate with the lower half-mold to produce said relatively soft material lining (7), said point not passing through the joint plane.
